# EUROPÄISCHE PATENTSCHRIFT

(11) **EP 1 875 090 B1**
(45) Veröffentlichungstag und Bekanntmachung des Hinweises auf die Patenterteilung: **04.01.2012**
(21) Anmeldenummer: 06724459.0
(22) Anmeldetag: 20.04.2006
(51) Int. Cl.: F16C 23/10, B60S 1/16

(54) **VERFAHREN ZUM LAGERN EINER WELLE SOWIE LAGERANORDNUNG**
METHOD OF SUPPORTING A SHAFT ON BEARINGS AND BEARING ARRANGEMENT
PROCEDE POUR LOGER UN ARBRE ET DISPOSITION DE PALIER

(30) Priorität: 27.04.2005 DE 102005019501
(43) Veröffentlichungstag der Anmeldung: 09.01.2008
(73) Patentinhaber: Valeo Wischersysteme GmbH, 74321 Bietigheim-Bissingen (DE)
(72) Erfinder: HARTMANN, Werner, 71665 Vaihingen/Enz (DE)
(74) Vertreter: Vötsch, Reiner
(86) Internationale Anmeldenummer: PCT/EP2006/003627
(87) Internationale Veröffentlichungsnummer: WO 2006/114237

(56) Entgegenhaltungen:
- EP-A1- 0 798 182
- DE-A1- 4 419 769
- DE-A1- 10 313 734
- FR-A- 2 855 571
- US-A- 5 634 726
- US-B1- 6 177 742

## Beschreibung

Die Erfindung bezieht sich auf ein Verfahren zum Lagern einer Welle, beispielsweise der Ausgangswelle eines Getriebes eines elektromotorischen Hilfsantriebs für Fahrzeuge, z.B. eines elektromotorischen Scheibenwischerantriebs gemäß Oberbegriff Patentanspruch 1 sowie auf eine Lageranordnung gemäß Oberbegriff Patentanspruch 8.

Bekannt ist eine Lageranordnung für die Ausgangswelle eines elektromotorischen Hilfsantriebes für Fahrzeuge, nämlich für die Ausgangswelle eines Schneckenradgetriebes eines Scheibenwischerantriebs (DE 44 19 769 A1). Um die Achse der Ausgangswelle bzw. ein an der Ausgangswelle vorgesehenes Schneckenrad in Bezug auf die Achse eines weiteren Getriebeelementes, nämlich im Bezug auf die Schnecke des Schneckenradgetriebes auszurichten, ist die Lageranordnung im Wesentlichen von einer Exzenterbuchse gebildet, die zur Lagerung der Ausgangswelle eine Lagerbohrung aufweist und in einer Aufnahmeöffnung eines Lagergehäuses oder Getriebegehäuseteils durch Presssitz gehalten ist. Das Ausrichten erfolgt durch Verdrehen der Exzenterbuchse in der Aufnahmeöffnung des Gehäuseteils. Um bei der Produktion eine vorgegebene Endlage der Exzenterbuchse in der Aufnahmeöffnung des Gehäuseteils sicherzustellen, weist die Exzenterbuchse an einem Ende einen überstehenden Flansch auf, der gegen die Innenfläche des Gehäuseteils anliegt. Die bekannte Lageanordnung ist allein schon durch den zusätzlichen Flansch an der Exzenterbuchse relativ aufwendig. Nachteilig ist aber insbesondere auch, dass das Ausrichten der Ausgangswelle bzw. des an dieser Welle vorgesehenen Schneckenrades in Bezug auf das mit dem Schneckenrad zusammenwirkende weitere Getriebeelement (Schnecke) nur bei in der Aufnahmeöffnung des Gehäuseteils bereits vollständig eingebrachter Exzenterbuchse möglich ist, d. h. für das Verdrehen der Exzenterbuchse beim Ausrichten ein erhebliches Drehmoment notwendig ist.

Bekannt ist weiterhin ein Verfahren zum ausgerichteten Lagern einer Ausgangswelle eines Schneckengetriebes eines elektromotorischen Scheibenwischerantriebs
(WO 94/05533), bei dem (Verfahren) nach dem Ausrichten der Welle ein zwischen dieser und einem Lagerkörper gebildeter Ringspalt mit einem Kunststoffmaterial ausgespritzt wird, welches nach dem Aushärten die Lagerbuchse für die Welle bildet.

Bekannt ist weiterhin eine Lageranordnung für die Ausgangswelle eines Schneckenradgetriebes eines elektromotorischen Hilfsantriebes für Fahrzeuge (DE 22 41 221 A1), bei dem als Lagerbuchse für die Welle wiederum eine Exzenterbuchse dient, die für das Ausrichten der Ausgangswelle bzw. des auf dieser vorgesehenen Schneckenrades in einer Aufnahmeöffnung eines Gehäuseteils verdrehbar vorgesehen ist und nach dem Ausrichten durch ein kappenartiges Arretierglied gegen weiteres Verdrehen gesichert wird. Auch diese Ausbildung ist aufwendig.

FR-A-28 55 571 offenbart den Obebegriff des Anspruchs 1.

Aufgabe der Erfindung ist es, ein Verfahren zum Lagern einer Welle eines Getriebes für einen elektromotorischen Hilfsantrieb, insbesondere zum Lagern einer Ausgangswelle eines solchen Getriebes aufzuzeigen, welches (Verfahren) unter Verwendung von preisgünstigen Bauteilen realisierbar ist und ein einfaches Ausrichten der Welle ermöglicht. Zur Lösung dieser Aufgabe ist ein Verfahren entsprechend dem Patentanspruch 1 ausgebildet. Eine Lageranordnung ist Gegenstand des Patentanspruches 8.

Weiterbildungen der Erfindung sind Gegenstand der Unteransprüche. Die Erfindung wird im Folgenden anhand der Figuren an verschiedenen Ausführungsbeispielen näher erläutert. Es zeigen:
- Fig. 1: in perspektivischer Darstellung ein Gehäuseteil eines Getriebegehäuses eines elektromotorischen Hilfsantriebes, in Form eines Scheibenwischerantriebes, zusammen mit einer in dem Gehäuseteil bzw. in einem dort ausgebildeten Lagergehäuse gelagerten Ausgangswelle;
- Fig. 2: in vergrößerter Darstellung einen Teilschnitt durch das Getriebegehäuse im Bereich der Lageranordnung für die Ausgangswelle;
- Fig. 3 und 4: eine Lager- bzw. Exzenterbuchse zur Lagerung der Ausgangswelle in Seitenansicht sowie in Draufsicht;
- Fig. 5 und 6: Darstellungen ähnlich Figur 2 während des Ausrichtens der Ausgangswelle mit der exzentrische Lagerhülse bzw. nach dem endgültigen Fixieren der Lagerhülse im Gehäuseteil;
- Fig. 7 und 8: jeweils in perspektivischer Darstellung und in unterschiedlichen Ansichten die Exzenterbuchse der Lageranordnung der Figuren 5 und 6;
- Fig. 9: eine Darstellung ähnlich Figur 2 bei einer weiteren möglichen Ausführungsform;
- Fig. 10 und 11: in perspektivischer Darstellung und in unterschiedlichen Ansichten die Exzenterbuchse der Lageranordnung der Figur 9.

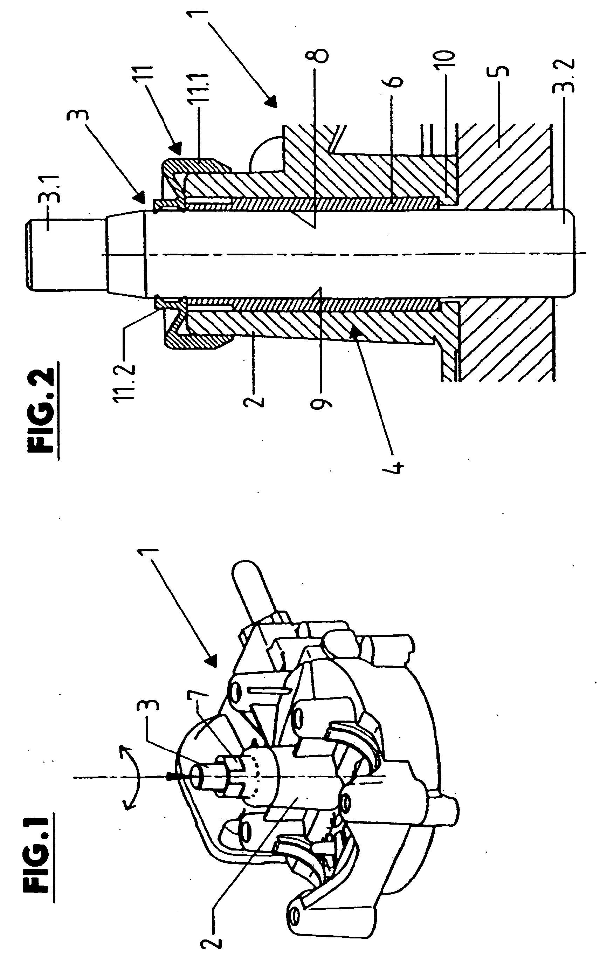

In den Figuren ist 1 das beispielsweise aus einem Metallspritzguß hergestellte Gehäuseteil des Getriebegehäuses eines Schneckengetriebes eines elektromotorischen Hilfsantriebs für Fahrzeuge, nämlich eines Scheibenwischerantriebs. In dem Gehäuseteil 1 bzw. in einem über die in der Figur 1 obere Außenseite des Gehäuseteil 1 vorstehenden, angeformten hohlzapfenartigen Lagergehäuse oder Abschnitt 2 ist eine Ausgangswelle 3 mittels einer Lageranordnung 4 drehbar gelagert, und zwar derart, dass die Ausgangswelle 3 mit einem Abschnitt 3.1 aus dem Getriebegehäuse vorsteht, und zwar für eine antriebsmäßige Verbindung mit weiteren Funktionselementen einer Scheibenwischanlage. Das andere Ende 3.2 der Ausgangswelle 3 trägt im Inneren des Getriebegehäuses ein Getriebe- oder Schneckenrad 5.

Die Lageranordnung 4 ist von einer Lager- bzw. Exzenterhülse bzw. -buchse 6 gebildet, die an dem dem Getrieberad 5 abgewandten Ende an ihrer kreiszylinderförmigen Außen- oder Umfangsfläche mit drei planen Flächenabschnitten bzw. Werkzeugangriffsflächen 7 versehen ist, deren Ebenen parallel zur Buchsenachse (Achse der kreiszylinderförmigen Außenfläche) orientiert sind und die um 90° gegeneinander versetzt um diese Achse vorgesehen sind. Die Exzenterbuchse 6 ist für die Welle 3 mit einer Lagerbohrung 8 versehen, deren Achse zwar parallel zur Buchsenachse orientiert ist, gegenüber dieser aber etwas exzentrisch versetzt ist.

Im montierten Zustand ist die Exzenterbuchse 6 in einer angepassten, d.h. kreiszylinderförmigen Bohrung oder Aufnahmeöffnung 9 des Gehäuseteilabschnittes 2 durch Presssitz gehalten. Die Presspassung zwischen der Außenfläche der Lagerbuchse 6 und der Innenfläche der Aufnahmeöffnung 9 ist dabei so gewählt, dass ein Mitdrehen der Exzenterbuchse 6 mit der Ausgangswelle 3 mit Sicherheit verhindert ist.

Wie der Figur 2 weiterhin zu entnehmen ist, ist die Exzenterbuchse 6 im montierten Zustand über ihre gesamte Länge von der Aufnahmeöffnung 9 aufgenommen und zwar derart, dass sie sich mit ihrem dem Getrieberad 5 zugewandten Ende an einem Bund oder Absatz 10 abstützt, der dadurch gebildet ist, dass die Aufnahmeöffnung 9 an der dem Getrieberad 5 und damit dem Innenraum des Getriebegehäuses zugewandten Ende einen Abschnitt mit einem reduzierten Durchmesser aufweist, der allerdings größer ist als der Außendurchmesser der Ausgangswelle 3.

Am freien Ende des Abschnitts 2 ist auf diesem eine Dichtungskappe 11 aus einem geeigneten elastischen Material, beispielsweise aus einem geeigneten gummielastischen Material aufgesetzt, die mit einem äußeren Kappenrad 11.1 das freie Ende des Abschnitts 2 übergreift und mit einem innenliegenden Rand 11.2 bzw. mit zwei in Achsrichtung der Ausgangswelle 3 versetzten ringförmigen Dichtungslippen gegen die Außenfläche der Ausgangswelle 3 anliegt und die Lageranordnung 4 dadurch nach außen hin abdichtet.

Die Montage erfolgt in der Form, dass bei zunächst mit nur einer Teillänge, z.B. mit etwa der halben Länge oder etwa zwei Drittel der Gesamtlänge in die Aufnahmeöffnung 9 eingesetzter Exzenterbuchse 6 und bei in dieser Exzenterbuchse 6 bereits gelagerter Ausgangswelle 3 mit dem an dieser Welle montierten Getrieberad 5 durch Verdrehen der Exzenterbuchse 6 um ihre Achse ein Ausrichten der Achse der Ausgangswelle 3 und damit des Getrieberades 5 im Bezug auf die Achse einer weiteren Welle, beispielsweise im Bezug auf die Achse der mit dem Getrieberad 5 zusammenwirkenden, nicht dargestellten Schnecke auf der Ankerwelle des Elektromotors derart erfolgt, dass der gewünschte Eingriff zwischen dem Getrieberad 5 und der Schnecke oder einem anderen Getriebeelement erreicht ist. Im Anschluss daran wird mit einem geeigneten Werkzeug die Exzenterbuchse 6 in die Aufnahmeöffnung 9 gepresst, bis diese mit ihrem in der Figur 2 unteren Stirnseite gegen den Bund 10 anliegt und in der Aufnahmeöffnung 9 durch Presssitz gehalten ist. In einem nächsten Arbeitsschritt wird die Dichtungskappe 11 aufgesetzt.

Die Lageranordnung 4 gestattet ein einfaches und schnelles Ausrichten der Achse der Ausgangswelle 3, und zwar bei einer preiswerten und äußerst kompakten Bauweise. Insbesondere ist auch die Exzenterbuchse 6 ohne einen Flansch einfach und preiswert zu fertigen. Dennoch ist durch den Bund 10 eine eindeutige axiale Lage der Exzenterbuchse 6 nach dem Einpressen in die Aufnahmeöffnung 9 gewährleistet.

Abweichend von den vorstehenden Ausführungen besteht auch die Möglichkeit, die Exzenterbuchse 8 an ihrer Außenfläche 7 leicht kegelstumpfförmig auszubilden, und zwar in der Form, dass sich ihr Außendurchmesser zu dem die Werkzeugangriffsflächen 7 aufweisenden Ende geringfügig vergrößert, sodass sich die beim Ausrichten der Achse der Ausgangswelle 3 nur mit einer Teillänge in die Aufnahmeöffnung 9 eingesetzte Exzenterbuchse 6 besonders leicht verdrehen lässt, nach dem Eindrücken oder Einpressen in die Aufnahmeöffnung 9 dort durch Presssitz gehalten ist.

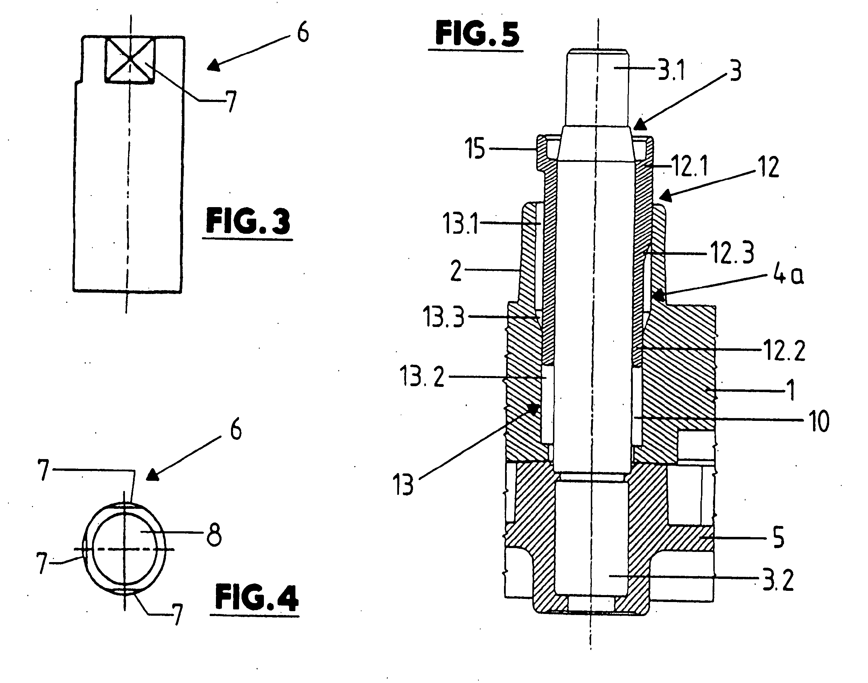

Die Figuren 5-8 zeigen als weitere mögliche Ausführungsform eine Lageanordnung 4a, die sich von der Lageranordnung 4 durch eine von der Exzenterbuchse 6 unterschiedliche Lager- bzw. Exzenterhülse bzw. -buchse 12 und eine an die Exzenterbuchse 12 angepasste Bohrung oder Aufnahmeöffnung 13 in dem Abschnitt 2 unterscheidet.

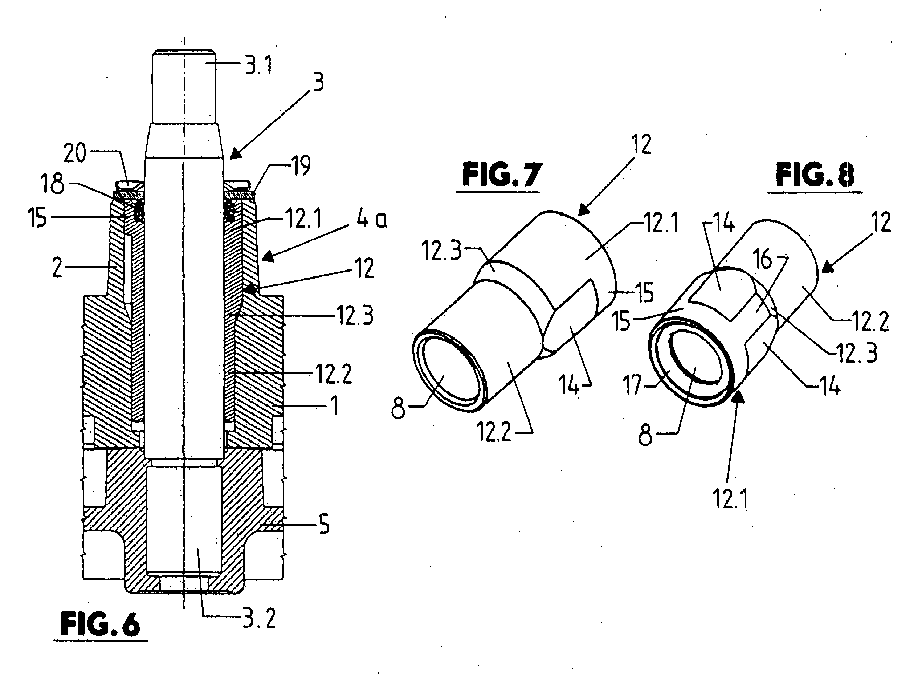

Die Exzenterbuchse 12, die wiederum die Lagerbohrung 8 für die Ausgangswelle 3 bildet, setzt sich im Wesentlichen aus drei Abschnitten zusammen, die in Richtung der Buchsenachse aufeinander folgen und achsgleich mit einander angeordnet sind, und zwar aus dem Abschnitt 12.1 mit dem größeren kreiszylinderförmigen Außendurchmesser, der das außen liegende in den Figuren 5 und 6 obere Ende der Exzenterbuchse 12 bildet, aus dem Abschnitt 12.2 mit reduziertem kreiszylinderförmigen Außendurchmesser, der das innen liegende in den Figuren 5 und 6 untere Ende der Exzenterbuchse 12 bildet, sowie aus einem Abschnitt 12.3, der den Übergang zwischen den Abschnitten 12.1 und 12.2 bildet und an welchem sich der Außendurchmesser der Exzenterbuchse kegelstumpfförmig vom Abschnitt 12.2 zum Abschnitt 12.1 hin vergrößert. Die Achse der Lagerbohrung 8 ist wiederum parallel zur Buchsenachse, gegenüber dieser aber etwas radial versetzt vorgesehen. An dem Abschnitt 12.1 weist die Exzenterbuchse 12 drei ebene Werkzeugangriffsflächen 14 auf, die wiederum in Ebenen parallel zur Achse der Exzenterbuchse 12 liegen und um 90° gegeneinander versetzt am Umfang der Exzenterbuchse 12 vorgesehen sind. Wie die Figuren 7 und 8 auch zeigen, erstrecken sich die Werkzeugangriffsflächen 14 auch in den Abschnitt 12.3 und sind bei der dargestellten Ausführungsform so ausgebildet, dass sie jeweils einen Abstand von der Buchsenachse aufweisen, der gleich dem halben Außendurchmesser des Abschnittes 12.2 ist.

Die Aufnahmeöffnung 13 ist an den Außendurchmesser der Exzenterbuchse 12 angepasst, d. h. sie besitzt drei Abschnitte, die in Achsrichtung der Aufnahmeöffnung 13 aneinander anschließen, nämlich den in den Figuren 5 und 6 oberen äußeren kreiszylinderförmigen Abschnitt 13.1 mit dem größeren Durchmesser, den in den Figuren 5 und 6 unteren kreiszylinderförmigen Abschnitt 13.2 mit dem kleineren Durchmesser und dem kegelstumpfförmigen Abschnitt 13.3, der den Übergang zwischen den Abschnitten 13.1 und 13.2 bildet.

Die Werkzeugangriffsflächen 14 enden jeweils mit Abstand von dem freien Ende des Abschnittes 12.1, sodass die Außenfläche des Abschnittes 12.1 an diesem Ende einen kreiszylinderförmigen und von den Werkzeugangriffsflächen 14 nicht unterbrochen ringförmigen Randbereich 15 bildet. Weiterhin sind die Werkzeugangriffsflächen 14 so ausgebildet, dass zwischen zwei in Umfangsrichtung aufeinander folgenden Werkzeugangriffsflächen 14 jeweils ein Steg 16 verbleibt.

Bei der Montage wird die Exzenterbuchse 12 mit einer Teillänge, bei der dargestellten Ausführungsform etwa mit zwei Dritteln ihrer Gesamtlänge, in die Aufnahmeöffnung 13 eingeführt, sodass die Exzenterbuchse 12 in der Aufnahmeöffnung 13 exakt ausgerichtet ist und die Ausgangswelle 3 in der Exzenterbuchse 12 bzw. in der dortigen Lagerbohrung 8 aufgenommen ist. Die Exzenterbuchse 12 ist dabei mit einer Teillänge ihres Abschnitts 12.1 im Abschnitt 13.1 und mit einer Teillänge ihres Abschnitts 12.2 im Abschnitt 13.2 der Aufnahmeöffnung 13 aufgenommen. Der Abschnitt 12.1 steht soweit aus dem Abschnitt 13.1 vor, dass die Werkzeugangriffsflächen 14 für ein Werkzeug zugänglich sind. Durch Verdrehen der Exzenterbuchse 12 erfolgt das Ausrichten der Ausgangswelle 3 und damit des Getrieberades 5 im Bezug auf ein weiteres Getriebeelement. Nach erfolgtem Ausrichten wird die Exzenterbuchse 12 mit einem geeigneten Presswerkzeug axial in die Aufnahmeöffnung 13 eingedrückt, sodass sie dann dort durch Presssitz gehalten ist.

Nach dem Einpressen der Exzenterbuchse 12 in die Aufnahmeöffnung 13 wird in eine nutenförmige Erweiterung 17, die die Lagerbohrung 8 an dem Ende des Abschnittes 12.1 aufweist und die zu diesem Ende sowie radial nach innen hin offen ist, ein die Ausgangswelle 3 umschließender Dichtungsring 18 eingesetzt und dieser anschließend durch eine auf die Ausgangswelle 3 aufgesetzte Scheibe 19 und einen diese Scheibe axial sichernden Sicherungsring 20 (z. B. Sprengring) gesichert.

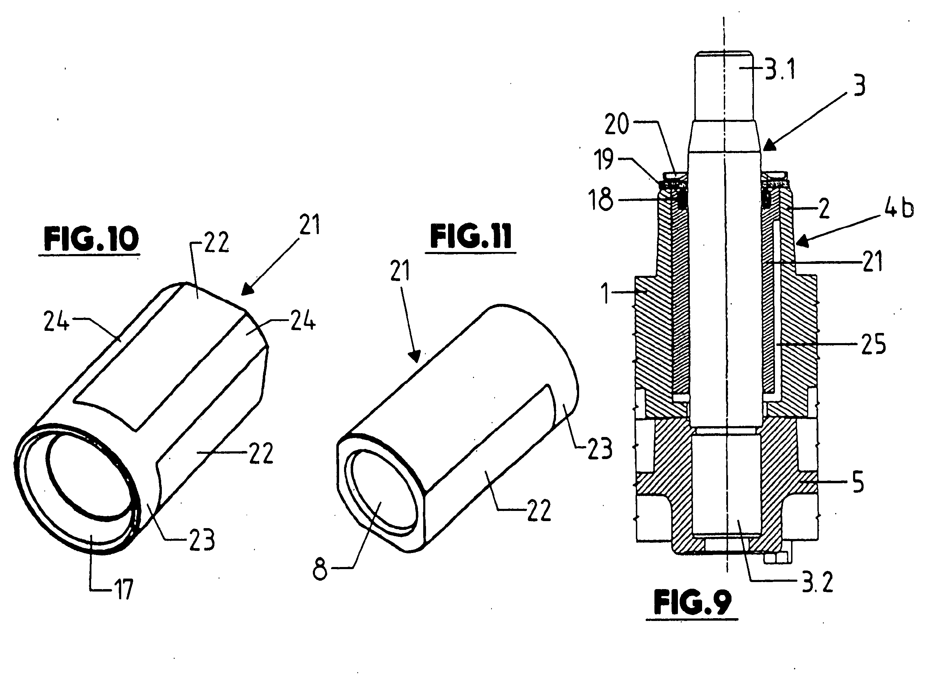

Die Figuren 9-11 zeigen als weitere mögliche Ausführungsform eine Lageranordnung 4b, die sich von der Lageranordnung 4a im Wesentlichen dadurch unterscheidet, dass anstelle der Exzenterbuchse 12 eine Lager- bzw. Exzenterhülse bzw. -buchse 21 verwendet ist, die wiederum die Lagerbohrung 8 für die Ausgangswelle 3 aufweist, an ihrer Außenfläche aber über ihre gesamte Länge kreiszylinderförmig ausgebildet ist, und zwar mit drei eingearbeiteten planen Werkzeugangriffsflächen 22, deren Ebenen parallel zur Buchsenachse der Exzenterbuchse 21 liegen und die um 90° gegeneinander versetzt um die Buchsenachse vorgesehen.

Wie die Figuren 10 und 11 zeigen, reichen bei dieser Ausführungsform die Werkzeugangriffsflächen 22 jeweils bis an das innere Ende der Exzenterbuchse 21, enden aber mit Abstand von dem äußeren Ende, sodass sich dort ein dem Randbereich 15 entsprechender Randbereich 23 ergibt, an dem die Außenfläche der Exzenterbuchse 21 durchgehend kreiszylinderförmig ausgeführt ist. Zwischen zwei in Umfangsrichtung aufeinander folgenden Werkzeugangriffsflächen ist weiterhin ein dem Steg 16 entsprechender Steg 24 gebildet. An dem dem Randbereich 23 zugeordneten Ende besitzt die Lagerbohrung 8 wiederum die Erweiterung 17 für den Dichtungsring 18.

Die der Aufnahmeöffnung 13 entsprechende Bohrung oder Aufnahmeöffnung 25 ist bei der Lageranordnung 4b kreiszylinderförmig ausgebildet. Für das Ausrichten der Achse der Ausgangswelle 3 wird die Exzenterbuchse 21 wiederum nur mit einer Teillänge in die Aufnahmeöffnung 25 eingesetzt. Das Ausrichten erfolgt durch Verdrehen der Exzenterbuchse 21 mit einem an den Werkzeugangriffsflächen 22 angreifenden Werkzeug. Nach dem Ausrichten und Eindrücken der Exzenterbuchse 21 in die Aufnahmeöffnung 25 wird in die Erweiterung 17 der Dichtungsring 18 eingesetzt und dieser mit der Scheibe 19 und dem Sicherungsring 20 gesichert.

Durch die Randbereiche 15 und 23 ist nach dem Einpressen der jeweiligen Exzenterbuchse 12 bzw. 21 die Aufnahmeöffnung 13 bzw. 25 bereits an der Außenseite des Gehäuseteils 1 abgedichtet.

Die Erfindung wurde voranstehend an Ausführungsbeispielen beschreiben. Es versteht sich, dass zahlreiche Änderungen sowie Abwandlungen möglich sind, ohne das dadurch der der Erfindung zugrunde liegende Gedanke verlassen wird.

### Bezugszeichenliste

- 1: Gehäuseteil
- 2: Gehäuseteilabschnitt
- 3: Ausgangswelle
- 3.1, 3.2: Ende der Ausgangswelle 3
- 4, 4a, 4b: Lageranordnung
- 5: Getrieberad
- 6: Lager- bzw. Exzenterbuchse
- 7: Werkzeugangriffsfläche
- 8: Lagerbohrung
- 9: Bohrung oder Aufnahmeöffnung im Gehäuseteilabschnitt 2
- 10: Bund
- 11: Dichtungskappe
- 11.1: äußerer Rand
- 11.2: innerer Rand
- 12: Lager- bzw. Exzenterbuchse
- 12.1, 12.2: zylinderförmiger Abschnitt
- 12.3: kegelstumpfförmiger Abschnitt
- 13: Bohrung oder Aufnahmeöffnung in Gehäuseteilabschnitt 2
- 13.1, 13.2, 13.3: Öffnungsabschnitt
- 14: Werkzeugangriffsfläche
- 15: Randbereich
- 16: Steg
- 17: Erweiterung der Lagerbohrung
- 18: Dichtungsring
- 19: Scheibe
- 20: Sicherungsring oder Sprengring
- 21: Exzenterbuchse
- 22: Werkzeugangriffsfläche
- 23: Randbereich
- 24: Steg
- 25: Bohrung oder Aufnahmeöffnung

## Patentansprüche

1. Verfahren zum Lagern einer Welle (3), beispielsweise der Ausgangswelle eines Getriebes eines elektromotorischen Hilfsantriebs für Fahrzeuge, z.B. eines elektromotorischen Scheibenwischerantriebs. In einem Lagergehäuse (2) unter Verwendung einer eine Lagerbuchse für die Welle (3) bildenden Exzenterbuchse (12, 21), wobei durch Verdrehen der in eine Aufnahmeöffnung (13, 25) des Lagergehäuses (2) eingesetzten Exzenterbuchse (12, 21) um ihre Buchsenachse ein Ausrichten der Welle (3) im Bezug auf wenigstens ein weiteres Getriebeelement verfolgt und die Exzenterbuchse durch Presssitz in der Aufnahmeöffnung (13, 25) des Lagergehäuses (2) verankert wird, wobei
das Ausrichten der Welle (3) bei mit lediglich einer Teillänge von einer Getriebegehäuseaußenseite in die Aufnahmeöffnung (13, 25) des Lagergehäuses (2) eingebrachter Exzenterbuchse (12, 21) und bei in der Exzenterbuchse (12, 21) aufgenommener Welle (3) erfolgt, wobei die Exzenterbuchse (12, 21) anschließend für den Presssitz in die Aufnahmeöffnung (13, 25) eingepresst wird, wobei
das Ausrichten bzw. Verdrehen der Exzenterbuchse (12, 21) mit einem an Werlezeugangriffshächen (7, 14, 22) angreifenden Werkzeug erfolgt, die an einer aus der Aufnahmeöffnung (13, 25) vorstehenden Teillänge der Exzenterbuchse (12, 21) vorgesehen sind und wobei
die Exzenterbuchse (12, 21) so in die Aufnahmeöffnung (13, 25) des Gehäuseteils eingepresst wird, dass sie über ihre gesamte Länge in dieser Aufnahmeöffnung (13, 25) aufgenommen ist,
**gekennzeichnet durch** die Verwendung einer an ihrer Außenfläche im Wesentlichen kreiszylinderförmigen Exzenterbuchse (12, 21), die im Bereich eines Endes an ihrer Umfangsfläche wenigstens zwei, beispielsweise wenigstens drei Werkzeugangriffsflächen (7) aufweist und in einer kreiszylinderförmigen Aufnahmeöffnung (13, 25) **durch** Einpressen verankerbar ist, wobei
die Exzenterbuchse (12, 21) beim Ausrichten aus der Aufnahmeöffnung vorstehenden Ende an der Außenfläche einen durchgehenden kreiszylinderförmigen Randbereich (15, 23) bildet.

2. Verfahren nach Anspruch 1, **dadurch gekennzeichnet, dass** das Einpressen der Exzenterbuchse (12, 21) in die Aufnahmeöffnung (13, 25) durch einen in dieser Aufnahmeöffnung (13, 25) gebildeten Anschlag (10) begrenzt wird.

3. Verfahren nach einem der vorhergehenden Anspruche, **dadurch gekennzeichnet, dass** nach dem Einpressen der Exzenterbuchse (12, 21) auf ein über eine Außenseite eines Getriebegehäuses vorstehendes Ende (3.1) der Welle (3) eine beispielsweise kappenförmige, die Welle (3) umschließende Dichtung (11) aufgesetzt wird.

4. Verfahren nach einem der vorhergehenden Ansprüche, **dadurch gekennzeichnet, dass** nach dem Einpressen der Exzenterbuchse (12, 21) in einen in einer Lagerbohrung (8) der Exzenterbuchse (12, 21) gebildeten Ringspalt (17) wenigstens eine die Welle (3) umschließende und gegen die Exzenterbuchse (12, 21) anliegende Dichtung (18) eingebracht wird.

5. Verfahren nach einem der vorhergehenden Ansprüche, **gekennzeichnet durch** die Verwendung einer Exzenterbuchse (12) mit mehreren in Richtung der Buchsenachse aneinander anschließenden Buchsenabschnitten (12.1, 12.2, 12.3), und zwar mit einem ersten Buchsenabschnitt (12.1) mit einer kreiszylinderförmigen Außenfläche und mit einem größeren Durchmesser an einem Ende der Exzenterbuchse (12), mit einem zweiten Buchsenabschnitt (12.2) mit einer kreiszylinderförmigen Außenfläche und mit einem gegenüber dem ersten Buchsenabschnitt reduzierten Außendurchmesser am anderen Ende der Exzenterbuchse (12) sowie mit einen den Übergang zwischen dem ersten und zweiten Buchsenabschnitt bildenden dritten Buchsenabschnitt (12.3) mit einem sich vom ersten Buchsenabschnitt (12.1) zum zweiten Buchsenabschnitt (12.2) reduzierenden Außendurchmesser, wobei die Aufnahmeöffnung (13) an die Formgebung der Exzenterbuchse (12) angepasst
ist und hierfür einen äußeren Öffnungsabschnitt (13.1) mit kreiszylinderförmiger Innenfläche und mit größerem Durchmesser, einen innen liegenden Öffnungsabschnitt (13.2) mit kreiszylinderförmiger Innenfläche und mit kleinerem Durchmesser sowie einen diese Öffhungsabschnitte verbindenden dritten Öffnungsabschnitt (13.3) mit einem sich vom ersten Öffnungsabschnitt zum zweiten Öffnungsabschnitt reduzierenden Durchmesser aufweist.

6. Verfahren nach Anspruch 5, **dadurch gekennzeichnet, dass** für das Ausrichten der Welle (3) die Exzenterbuchse (12) jeweils mit einer Teillänge ihres ersten Abschnittes (12.1) in den ersten Öffnungsabschnitt (13.1) und mit einer Teillänge ihres zweiten Abschnittes (12.2) in den zweiten Ofinungsabschnit (13.2) hineinreicht.

7. Verfahren nach einem der vorhergehenden Ansprüche, **gekennzeichnet durch** die Verwendung einer Exzenterbuchse (12, 21), bei der sich die Werkzeugangriffsflächen (7, 14, 22) nur jeweils über eine Teillänge der Exzenterbuchse (12, 21) erstrecken.

8. Lageranordnung für eine Welle (3), beispielsweise eine Ausgangswelle eines Getriebes eines elektromotorischen Hilfsantriebs für Fahrzeuge, z.B. eines elektromotorischen Scheibenwischerantriebs, mit einer Lagerbuchse, die zum Ausrichten der Welle (3) im Bezug auf wenigstens ein weiteres Getriebeelement durch Verdrehen um ihre Buchsenachse als Exzenterbuchse (12, 21) ausgebildet und durch Einpressen und Presssitz in einer Aufnahmeöffnung (13, 25) eines Lagergehäuses (2) verankert ist, wobei
die Exzenterbuchse (6, 12, 21) flanschlos ausgebildet ist, und wobei
sich die Werkzeug angriffsflächen (14, 22) nur jeweils über eine Teillänge der Exzenterbuchse (12, 21) erztrecken, wobei die Exzenterbuchse (12, 21) über ihre gesamte Länge in der Aufnahmeöffnung (13, 25) aufgenommen ist
**gekennzeichnet durch** eine an ihrer Außenfläche kreiszylinderförmige Exzenterbuchse (12, 21), die im Bereich eines Endes an ihrer Umfangsfläche wenigstens zwei, beispielsweise wenigstens drei Werkzeuganariffsflächen (14, 22) aufweist und in der kreiszylinderförmigen Aufnahmeöffnung (13, 25) **durch** Einpressen verankert ist,
wobei die
Exzenterbuchse (12, 21) an einem außen liegenden Ende an ihrer Außenfläche einen durchgehenden kreiszylinderlörmigen Randbereich (15, 23) aufweist.

9. Lageranordnung nach Anspruch 8, **dadurch gekennzeichnet, dass** in der Aufnahmeöffnung (13, 25) ein das Einpressen der Exzenterbuchse (12, 21) begrenzender Anschlag (10) ausgebildet ist.

10. Lageranordnung nach einem der vorhergehenden Ansprüche, **dadurch gekennzeichnet, dass** auf ein über die Außenseite eines Getriebegehäuses vorstehendes Ende (3.1) der Welle (3) eine beispielsweise kappenförmige, die Welle (3) umschließende Dichtung (11) aufgesetzt ist.

11. Lageranordnung nach einem der vorhergehenden Ansprüche, **dadurch gekennzeichnet, dass** in einen in einer Lagerbohrung (8) der Exzenterbuchse (12, 21) gebildeten Ringspalt (17) wenigstens eine die Welle (3) umschließende und gegen die Exzenterbuchse (12, 21) anliegende Dichtung (18) eingebracht ist.

12. Lageranordnung nach einem der vorhergehenden Ansprüche, **gekennzeichnet durch** eine Exzenterbuchse (12) mit mehreren in Richtung der Buchsenachse aneinanderanschließenden Buchsenabschnitten (12.1, 12.2, 12.3), und zwar mit einem ersten Buchsenabschnitt (12.1) mit einer kreiszylinderförmigen Außenfläche und mit einem größeren Durchmesser an einem Ende der Exzenterbuchse (12), mit einem zweiten Buchsenabschnitt (12.2) mit einer kreiszylinderförmigen Außenfläche und mit einem gegenüber dem ersten Buchsenabschnitt reduzierten Außendurchmesser am anderen Ende der Exzenterbuchse (12) sowie mit einen den Übergang zwischen dem ersten und zweiten Buchsenabschnitt bildenden dritten Buchsenabschnitt (12.3) mit einem sich vom ersten Buchsenabschnitt (12.1) zum zweiten Buchsenabschnitt (12.2) reduzierenden Außendurchmesser, wobei die Aufnahmeöffnung (13) an die Formgebung der Exzenterbuchse (12) angepasst ist und hierfür einen äußeren Öffnungsabschnitt (13.1) mit kreiszylindertörmiger Innenfläche und mit größerem Durchmesser, einen innenliegenden Öffnungsabschnitt (13.2) mit kreisryünderförmiger Innenfläche und mit kleinerem Durchmesser sowie einen diese Öffnungsabschnitte verbindenden dritten Öffnungsabschnitt (13.3) mit einem sich vom ersten Öffnungsabschnitt zum zweiten Öffnungsabschnitt reduzierenden Durchmesser aufweist.

13. Lageranordnung nach einem der vorhergehenden Ansprüche **dadurch gekennzeichnet, dass** die Werkzeugangriffsflächen (22) bis an das erste Ende
der Exzenterbuchse (21) reichen.

14. Lageranordnung nach einem der vorhergehenden Ansprüche, **dadurch gekennzeichnet, dass** das Lagergehäuse (2) Teil eine Getriebegehäuseteils (1) ist.

## Claims

1. Method for supporting a shaft (3), for example the output shaft of a gear of an electromotive accessory drive for vehicles, for example of an electromotive windscreen wiper drive, in a bearing housing (2) using an eccentric bush (12, 21) forming a bearing bush for the shaft (3) the shaft (3) being aligned in relation to at least a further gear element by rotating the eccentric bush (12, 21), which is inserted into a receiving opening (13, 25) of the bearing housing (2), about its bush axis and the eccentric bush being anchored in the receiving opening (13, 25) of the bearing housing (2) by an interference fit, the shaft (5) being aligned with only a partial length of the eccentric bush (12, 21) inserted from a gearbox housing outer side into the receiving opening (13, 25) of the bearing housing (2) and with output shaft (2) received in the eccentric bush (12, 21), the eccentric bush (12, 21) then being pressed into the receiving opening (13, 25) for the interference fit, the eccentric bush (12, 21) being aligned and rotated using a tool acting on tool contact surfaces (7, 14, 22) provided on a partial length, projecting from the receiving opening (13, 25), of the eccentric bush (12, 21) and the eccentric bush (12, 21) being pressed into the receiving opening (13, 25) of the bearing housing in such a way that the eccentric bush is received over its entire length in this receiving opening (13, 25), **characterised by** the use of an eccentric bush (12, 21) whose outer surface is substantially cylindrical and which, in the region of one end, has on its peripheral surface at least two, for example at least three tool contact surfaces (7) and can be anchored in a cylindrical receiving opening (13, 25) by press-fitting, the eccentric bush (12, 21) forming a continuous cylindrical edge region (15, 23) on the outer surface on the end thereof projecting from the receiving opening during alignment.

2. Method according to claim 1, **characterised in that** the press-fitting of the eccentric bush (12, 21) into the receiving opening (13, 25) is limited by a stop (10) formed in this receiving opening (13, 25).

3. Method according to any one of the preceding claims, **characterised in that** after the press-fitting of the eccentric bush (12, 21), a for example cap-shaped seal (11) surrounding the shaft (3) is placed on an end (3.1) of the output shaft (3) projecting over an outer side of a gearbox housing.

4. Method according to any one of the preceding claims, **characterised in that** after the press-fitting of the eccentric bush (12, 21), at least one seal (18) surrounding the shaft (3) and lying against the eccentric bush (12, 21) is inserted into an annular gap (17) formed in a bearing bore (8) of the eccentric bush.

5. Method according to any one of the preceding claims, **characterised by** the use of an eccentric bush (12) comprising a plurality of bush portions (12.1, 12.2, 12.3) adjacent to one another in a direction of the bush axis, and specifically comprising a first bush portion (12.1) comprising a cylindrical outer surface and having a larger diameter at one end of the eccentric bush (12), comprising a second bush portion (12.2) at the other end of the eccentric bush (12) having a cylindrical outer surface and having a smaller external diameter than the first bush portion, and comprising a third bush portion (12.3) forming the transition between the first and second bush portions, having a decreasing external diameter from the first bush portion (12.1) to the second bush portion (12.2), the receiving opening (13) being adapted to the shape of the eccentric bush (12) and comprising for this purpose an outer opening portion (13.1) comprising a cylindrical inner surface and having a larger diameter, an inner opening portion (13.2) comprising a cylindrical inner surface and having a smaller diameter, and a third opening portion (13.3) connecting these opening portions and having a decreasing diameter from the first opening portion to the second opening portion.

6. Method according to claim 5, **characterised in that** for aligning the shaft (3) the eccentric bush (12) extends in each case with a partial length of its first portion (12.1) into the first opening portion (13.1) and with a partial length of its second portion (12.2) into the second opening portion (13.2).

7. Method according to any one of the preceding claims, **characterised by** the use of an eccentric bush (12, 21), wherein the tool contact surfaces (7, 14, 22) only extend over a partial length of the eccentric bush (12, 21) in each case.

8. Bearing arrangement for a shaft (3), for example an output shaft of a gear of an electromotive accessory drive for vehicles, for example of an electromotive windscreen wiper drive, comprising a bearing bush which, to align the shaft (3) in relation to at least one further gear element by rotation about its bush axis, is formed as an eccentric bush and is anchored by press-fitting and interference fit in a receiving opening (13, 25) of a bearing housing (2), the eccentric bush (6,12, 21) having no flange, and the tool contact surfaces (14, 22) only extending over a partial length of the eccentric bush (12, 21) in each case, the eccentric bush (12, 21) being received in the receiving opening (13, 25) over its entire length, **characterised by** an eccentric bush (12, 21) having a cylindrical outer surface which, in the region of one end, has on its peripheral surface at least two, for example at least three tool contact surfaces (14, 22) and is anchored in the cylindrical receiving opening (13, 25) by press-fitting, the eccentric bush (12, 21) comprising on an outer end of their outer surface a continuous cylindrical edge region (15, 23).

9. Bearing arrangement according to claim 8, **characterised in that** a stop (10) limiting the press-fitting of the eccentric bush (12, 21) is formed in the receiving opening (13, 25).

10. Bearing arrangement according to any one of the preceding claims, **characterised in that** for example a cap-shaped seal (11) surrounding the shaft (3) is placed on an end (3.1) of the shaft (3) projecting over the outer side of a gearbox housing.

11. Bearing arrangement according to any one of the preceding claims, **characterised in that** at least one seal (18) surrounding the shaft (3) and lying against the eccentric bush (12, 21) is inserted into an annular gap (17) formed in a bearing bore (8) of the eccentric bush (12, 21).

12. Bearing arrangement according to any one of the preceding claims **characterised by** an eccentric bush (12) comprising with a plurality of bush portions (12.1, 12.2, 12.3) adjacent to one another in a direction of the bush axis, and specifically comprising a first bush portion (12.1) comprising a cylindrical outer surface and having a larger diameter at one end of the eccentric bush (12), comprising a second bush portion (12.2) at the other end of the eccentric bush (12) comprising a cylindrical outer surface and having a smaller external diameter than the first bush portion, and comprising a third bush portion (12.3) forming the transition between the first and second bush portions, having a decreasing external diameter from the first bush portion (12.1) to the second bush portion (12.2), the receiving opening (13) being adapted to the shape of the eccentric bush (12) and comprising for this purpose an outer opening portion (13.1) comprising a cylindrical inner surface and having a larger diameter, an inner opening portion (13.2) comprising a cylindrical inner surface and having a smaller diameter, and a third opening portion (13.3) connecting these portions and having a decreasing diameter from the first opening portion to the second opening portion.

13. Bearing arrangement according to any one of the preceding claims, **characterised in that** the tool contact surfaces (22) extend to the first end of the eccentric bush (21).

14. Bearing arrangement according to any one of the preceding claims, **characterised in that** the bearing housing (2) is a part of a gearbox housing portion (1).

## Revendications

1. Procédé pour la fixation d'un arbre (3), par exemple de l'arbre de sortie d'un engrenage d'un entraînement auxiliaire électromoteur pour des véhicules, par exemple d'un entraînement de lave-glace à moteur électrique, dans un boîtier de palier (2) en utilisant un coussinet d'excentrique (12, 21) formant un coussinet de palier pour l'arbre (3), une orientation de l'arbre (3) par rapport à au moins un autre élément d'engrenage s'effectuant par rotation du coussinet d'excentrique (12, 21), inséré dans une ouverture de logement (13, 25) du boîtier de palier (2), autour de son axe de coussinet et le coussinet d'excentrique étant fixé par ajustement serré dans l'ouverture de logement (13, 25) du boîtier de palier (2),
l'orientation de l'arbre (3) s'effectuant lorsque le coussinet d'excentrique (12, 21) est introduit avec uniquement une longueur partielle par un côté extérieur de boîtier d'engrenage dans l'ouverture de logement (13, 25) du boîtier de palier (2) et lorsque l'arbre (3) est réceptionné dans le coussinet d'excentrique (12, 21), le coussinet d'excentrique (12, 21) étant enfoncé ensuite pour l'ajustement serré dans l'ouverture de logement (13, 25),
l'orientation respectivement la rotation du coussinet d'excentrique (12, 21) s'effectuant avec un outil s'appliquant sur des surfaces de prise d'outil (7, 14, 22) qui sont prévues sur une longueur partielle dépassant de l'ouverture de logement (13, 25) du coussinet d'excentrique (12, 21) et
le coussinet d'excentrique (12, 21) étant inséré dans l'ouverture de logement (13, 25) de la partie de boîtier de telle sorte qu'il soit réceptionné sur l'ensemble de sa longueur dans cette ouverture de logement (13, 25),
**caractérisé par** l'utilisation d'un coussinet d'excentrique (12, 21) de forme essentiellement cylindrique circulaire sur sa surface extérieure, lequel présente dans la zone d'une extrémité sur sa surface périphérique au moins deux, par exemple au moins trois surfaces de prise d'outil (7) et peut être fixé dans une ouverture de logement (13, 25) cylindrique circulaire par enfoncement,
le coussinet d'excentrique (12, 21) formant une zone périphérique (15, 23) continue et cylindrique circulaire sur la surface extérieure sur son extrémité dépassant de l'ouverture de logement lors de l'orientation.

2. Procédé selon la revendication 1, **caractérisé en ce que** l'enfoncement du coussinet d'excentrique (12, 21) dans l'ouverture de logement (13, 25) est limité par une butée (10) formée dans cette ouverture de logement (13, 25).

3. Procédé selon l'une des revendications précédentes, **caractérisé en ce que**, après l'enfoncement du coussinet d'excentrique (12, 21), un joint (11) par exemple en forme de capot, entourant l'arbre (3), est posé sur une extrémité (3.1), dépassant par un côté extérieur d'un boîtier d'engrenage, de l'arbre (3).

4. Procédé selon l'une des revendications précédentes, **caractérisé en ce que**, après l'enfoncement du coussinet d'excentrique (12, 21), au moins un joint (18) entourant l'arbre (3) et s'appliquant contre le coussinet d'excentrique (12, 21) est introduit dans une fente annulaire (17) formée dans un alésage de palier (8) du coussinet d'excentrique (12, 21).

5. Procédé selon l'une des revendications précédentes, **caractérisé par** l'utilisation d'un coussinet d'excentrique (12) comprenant plusieurs parties de coussinet (12.1, 12.2, 12.3) se raccordant les unes aux autres en direction de l'axe de coussinet, et ce avec une première partie de coussinet (12.1) avec une surface extérieure cylindrique circulaire et avec un diamètre plus grand sur une extrémité du coussinet d'excentrique (12), avec une deuxième partie de coussinet (12.2) avec une surface extérieure cylindrique circulaire et avec un diamètre extérieur réduit par rapport à la première partie de coussinet sur l'autre extrémité du coussinet d'excentrique (12) et avec une troisième partie de coussinet (12.3) formant la transition entre la première et la deuxième partie de coussinet avec un diamètre extérieur se réduisant depuis la première partie de coussinet (12.1) vers la deuxième partie de coussinet (12.2), l'ouverture de logement (13) étant adaptée à la forme du coussinet d'excentrique (12) et présentant à cet effet une partie d'ouverture (13.1) extérieure avec une surface intérieure cylindrique circulaire et avec un diamètre plus grand, une partie d'ouverture (13.2) intérieure avec une surface intérieure cylindrique circulaire et avec un diamètre plus petit, et une troisième partie d'ouverture (13.3) reliant ces parties d'ouverture avec un diamètre se réduisant depuis la première partie d'ouverture vers la deuxième partie d'ouverture.

6. Procédé selon la revendication 5, **caractérisé en ce que**, pour l'orientation de l'arbre (3), le coussinet d'excentrique (12) va à chaque fois avec une longueur partielle de sa première partie (12.1) dans la première partie d'ouverture (13.1) et avec une longueur partielle de sa deuxième partie (12.2) dans la deuxième partie d'ouverture (13.2).

7. Procédé selon l'une des revendications précédentes, **caractérisé par** l'utilisation d'un coussinet d'excentrique (12, 21), sur lequel les surfaces de prise d'outil (7, 14, 22) ne s'étendent respectivement que sur une longueur partielle du coussinet d'excentrique (12, 21).

8. Agencement de palier pour un arbre (3), par exemple un arbre de sortie d'un engrenage d'un entraînement auxiliaire électromoteur pour véhicules, par exemple d'un entraînement d'essuie-glace à moteur électrique, avec un coussinet de palier qui, pour l'orientation de l'arbre (3) par rapport à au moins un autre élément d'engrenage, est formé par rotation autour de son axe de coussinet comme coussinet d'excentrique (12, 21) et est fixé par introduction et ajustage serré dans une ouverture de logement (13, 25) d'un boîtier de palier (2),
le coussinet d'excentrique (12, 21) étant conçu sans bride, et
les surfaces de prise d'outil (14, 22) s'étendant seulement respectivement sur une longueur partielle du coussinet d'excentrique (12, 21), le coussinet d'excentrique (12, 21) étant réceptionné sur l'ensemble de sa longueur dans l'ouverture de logement (13, 25), **caractérisé par** un coussinet d'excentrique (12, 21) de forme cylindrique circulaire sur sa surface extérieure, qui présente dans la zone d'une extrémité sur sa surface périphérique au moins deux, par exemple au moins trois surfaces de prise d'outil (14, 22) et est fixé par enfoncement dans l'ouverture de logement (13, 25) cylindrique circulaire,
le coussinet d'excentrique (12, 21) présentant sur une extrémité située à l'extérieur sur sa surface extérieure une zone périphérique (15, 23) continue et cylindrique circulaire.

9. Agencement de palier selon la revendication 8, **caractérisé en ce qu'**une butée (10) délimitant l'enfoncement du coussinet d'excentrique (12, 21) est réalisée dans l'ouverture de logement (13, 25).

10. Agencement de palier selon l'une des revendications précédentes, **caractérisé en ce qu'**un joint (11), par exemple en forme de capot, entourant l'arbre (3), est posé sur une extrémité (3.1), dépassant par le côté extérieur d'un boîtier d'engrenage, de l'arbre (3).

11. Agencement de palier selon l'une des revendications précédentes, **caractérisé en ce qu'**au moins un joint (18) entourant l'arbre (3) et s'appliquant contre le coussinet d'excentrique (12, 21) est introduit dans une fente annulaire (17) formée dans un alésage de palier (8) du coussinet d'excentrique (12, 21).

12. Agencement de palier selon l'une des revendications précédentes, **caractérisé par** un coussinet d'excentrique (12) avec plusieurs parties de coussinet (12.1, 12.2, 12.3) se raccordant les unes aux autres en direction de l'axe de coussinet, et ce avec une première partie de coussinet (12.1) avec une surface extérieure cylindrique circulaire et avec un plus grand diamètre sur une extrémité du coussinet d'excentrique (12), avec une deuxième partie de coussinet (12.2) avec une surface extérieure cylindrique circulaire et avec un diamètre extérieur réduit par rapport à la première partie de coussinet sur l'autre extrémité du coussinet d'excentrique (12), et avec une troisième partie de coussinet (12.3) formant la transition entre la première et la seconde partie de coussinet avec un diamètre extérieur se réduisant depuis la première partie de coussinet (12.1) en direction de la deuxième partie de coussinet (12.2), l'ouverture de logement (13) étant adaptée à la forme du coussinet d'excentrique (12) et présentant à cet effet une partie d'ouverture (13.1) extérieure avec une surface intérieure cylindrique circulaire et avec un diamètre plus grand, une partie d'ouverture (13.2) intérieure avec une surface intérieure de forme cylindrique circulaire et avec un diamètre plus petit, ainsi qu'une troisième partie d'ouverture (13.3) reliant ces parties d'ouverture avec un diamètre se réduisant depuis la première partie d'ouverture en direction de la deuxième partie d'ouverture.

13. Agencement de palier selon l'une des revendications précédentes, **caractérisé en ce que** les surfaces de prise d'outil (22) vont jusqu'à la première extrémité du coussinet d'excentrique (21).

14. Agencement de palier selon l'une des revendications précédentes, **caractérisé en ce que** le boîtier de palier (2) fait partie d'une partie de boîtier d'engrenage (1).
